# EUROPEAN PATENT SPECIFICATION

(11) **EP 4 016 963 B1**
(45) Date of publication and mention of the grant of the patent: **10.09.2025**
(21) Application number: 21214695.5
(22) Date of filing: 15.12.2021
(51) Int. Cl.: H04L 41/0823, G06N 3/126, H04L 41/16, H04L 41/0895, H04L 41/0897, H04L 41/40, H04L 41/0853, H04L 41/147

(54) **METHOD OF MANAGING RESOURCES OF AN INFRASTRUCTURE FOR NETWORK FUNCTION VIRTUALIZATION**
VERFAHREN ZUR VERWALTUNG VON RESSOURCEN EINER INFRASTRUKTUR FÜR NETZWERKFUNKTIONSVIRTUALISIERUNG
PROCÉDÉ DE GESTION DE RESSOURCES D'UNE INFRASTRUCTURE POUR LA VIRTUALISATION DE FONCTIONS DE RÉSEAU

(30) Priority: 16.12.2020 IT 202000031034
(43) Date of publication of application: 22.06.2022
(73) Proprietor: Vodafone Italia S.p.A., 10015 Ivrea (TO) (IT); Scuola Superiore di Studi Universitari e Perfezionamento Sant'Anna, 56127 Pisa (PI) (IT)
(72) Inventor: Sposato, Enrica, 10015 Ivrea TO (IT); Artale Antonino, 10015 Ivrea TO (IT); Cucinotta, Tommaso, 56127 Pisa PI (IT); Vannucci Marco, 56127 Pisa PI (IT); Lanciano, Giacomo, 56127 Pisa PI (IT); Jorge Luisa Neves Pires, 10015 Ivrea TO (IT); Galli, Filippo, 56127 Pisa PI (IT); Brau, Fabio, 56127 Pisa PI (IT)
(74) Representative: Boult Wade Tennant LLP

(56) References cited:
- CN-B- 107 995 039
- US-A1- 2017 126 792
- US-A1- 2020 019 841
- US-A1- 2020 118 039
- SEONGBOK BAIK KT REPUBLIC OF KOREA: "Machine learning in 5G and future networks: use cases and basic requirements;ML5G-I-118-R7", vol. 1, 18 February 2019 (2019-02-18), pages 1 - 42, XP044262758, Retrieved from the Internet <URL:https://extranet.itu.int/sites/itu-t/focusgroups/ML5G/input/ML5G-I-118-R7.docx> [retrieved on 20190218]
- SUBRAMANYA TEJAS ET AL: "Machine Learning-Driven Scaling and Placement of Virtual Network Functions at the Network Edges", 2019 IEEE CONFERENCE ON NETWORK SOFTWARIZATION (NETSOFT), IEEE, 24 June 2019 (2019-06-24), pages 414 - 422, XP033601982, DOI: 10.1109/NETSOFT.2019.8806631

## Description

### Field of the invention

The present invention relates to a method of managing resources of an infrastructure for Network Function Virtualization This method is namely used in telephone infrastructure management.

### Background art

Infrastructures for Network Function Virtualization (NFV infrastructures) are known in the art. Specifically, the term Network Function Virtualization refers to an architectural approach that leverages information technologies to virtualize network services. In other words, Network Function Virtualization refers to a network approach that can replace hardware devices such as routers and firewalls with software-based network applications that operate as Virtual Machines (VMs) on standard servers. Network Function Virtualization also refers to lightweight virtualization methods such as operating system level methods also known as container systems.

More in detail, the NFV infrastructure turns network functionality into software applications known as Virtual Network Functions (VNFs) that can be instantiated on a server. In other words, VNFs are deployed within the NFV infrastructure in the form of software running in several virtual machines.

Also, optimal operation of an NFV infrastructure is known to require proper management of infrastructure resources.

Conventionally, an operator calibrates the number of virtual machines to be installed for each VNF, as well as the associated hardware requirements based on static information. For example, such static information meets the specifications provided by the infrastructure provider concerning the amount of virtual machines and the maximum amount of hardware resources that each virtual machine requires depending on given traffic volume levels.

Based on this information, the operator normally applies a heuristic or optimal allocation algorithm to allocate virtual machines to the infrastructure and decide how to possibly expand it to accommodate the expected load.

The prior art document US 2020/0019841 A1 discloses an autoscaling mechanism which uses a neural network, namely an RNN of LSTM type, to assess the future trend of resource demands of a set of VMs, so that the "elastic controller" of the set of VMs can scale the set in time, and allocate the necessary resources within a Cloud computing infrastructure. The mechanism obviously relies on a real-time automated autoscaling mechanism, as used in Cloud computing infrastructures, which adaptively and dynamically tune the size of the autoscaling group, and monitor resource consumption by the VMs of the set in real time. These models, like in the provision of the so-called elasticity, consider that the available physical infrastructure is virtually infinite, whereby such autoscaling mechanism only works properly if the additional resources required can be immediately allocated and made available to the set of VMs being controlled. The document also discloses a method whose purpose is to check whether predictions are accurate, represented by a so-called validator, which compares the predicted output with the actual resource consumption as determined at a later time, the comparison of the two signals by dynamic time warping methods providing a predictor reliability index. When the prediction error exceeds a threshold value, the mechanism retrains the predictor in an attempt to compensate for any mode changes, known as concept drifts.

### Problem of the prior art

Nevertheless, during deployment of virtual machines, there may occur a considerable underutilization of resources by each virtual machine or, in any case, a misalignment with the information provided by the infrastructure provider, as a result of the actual load conditions acting thereupon (traffic volume, but also type of requests made on the system).

The continued presence of resource underutilization conditions forces the operator to apply overprovisioning policies, typically configured in a fully static manner.

As a result, the infrastructure management team shall frequently perform multiple reallocations of virtual machines across the infrastructure to compensate for noisy neighbor issues caused by virtual machines that sporadically and unexpectedly exhibit compatible load peaks. Also, the infrastructure management team shall also perform infrastructure resizing operations, typically by expanding the capacity of virtual machines through scale-out operations, i.e. by increasing the number of virtual machines that handle infrastructure traffic ("horizontal scaling"), or scale-up operations, i.e. by increasing the resources available to each of the virtual machines that handle infrastructure traffic ("vertical scaling"). On the other hand, the need may also arise to restrict the capacities by the corresponding reverse scale-in or scale-down steps, to release excess allocated resources, and make them available to other VNFs.

These events generate a considerable operational burden on the infrastructure management team, as well as a continued risk of performance degradation or disruption in the delivery of infrastructure services during VMotion and data-center optimization operations.

The forecasts obtained with the method of US 2020/0019841 A1 are used to instantly re-tune the number of VMs in an elastic set of VMs which implement some service (or even VNFs), if the number of VMs currently allocated is assumed to be insufficient, in view of the forecast short-term resource consumption levels and only based on metrics acquired in the history of the monitoring system, by creating new VMs whose underlying infrastructure is assumed to be able to allocate physical resources instantly, or within the typical Cloud computing autoscaling times (a few minutes). This known method is suitable for use by a user of a Cloud computing or NFV infrastructure (e.g., a VNF team performing operations according to a VNF specification), who is not concerned about the size of the underlying physical infrastructure, and in fact generally relies on the principle of being able to consider this infrastructure as virtually infinite (with someone else being concerned about the physical size of that physical infrastructure, i.e. the cloud provider) - whereby such user may set up elastic control mechanisms that require, where appropriate, dynamic expansion or contraction of the set of VMs that implement a given service or VNF, using short-term predictions of resource consumption levels, without having to worry about the actual availability of underlying physical resources.

### Summary of the invention

Therefore, the technical purpose of the present invention is to provide a method for managing resources of an infrastructure for Network Function Virtualization that can overcome the drawbacks of the prior art.

In particular, an object of the present invention is to provide a method that affords proper allocation of physical resources for virtual machines, accounting for actual resource requirements (computing power, memory, network, storage systems, etc.) of virtual machines, as well as their assumable trend over a preset time frame.

The aforementioned technical purpose and objects are substantially fulfilled by a method of managing resources of an infrastructure for Network Function Virtualization, that comprise the technical features as disclosed in any of the accompanying claims.

### Benefits of the invention

A preferred embodiment of the invention affords predictive optimization of infrastructure management operations since, considering resource requirement forecasts as projected over a future time frame, physical resources may be allocated to virtual machines in a manner that is suitable to the workloads predicted in such time frame. As a result, any additional maintenance operations as required for infrastructure management are minimized.

In one embodiment, an operator who manages a physical infrastructure for Network Function Virtualization, or more generally for Cloud computing, may take prompt capacity planning actions, i.e. resize (e.g. expand) the physical capacity of the infrastructure by accounting for medium/long-term forecasts of traffic volumes (NFV/app-levels variables), as well as physical resource consumption levels (INFRA variables); these forecasts are used to define an optimization problem to calculate the optimal use of the additional physical resources to be acquired, to allocate them to virtualized loads that are being produced or to be added according to the evolution/expansion policies of the operator, thereby affording prompt re-tuning/expansion of the physical infrastructure as appropriate, including, for example, provisioning, commissioning, wiring and configuring new racks, new servers, network and storage elements.

### BIEF DESCRIPTION OF THE DRAWINGS

Further features and advantages of the present invention will result more clearly from the illustrative, non-limiting description of a preferred, non-exclusive embodiment of a method for managing resources of an infrastructure for Network Function Virtualization as shown in the accompanying figures, in which:

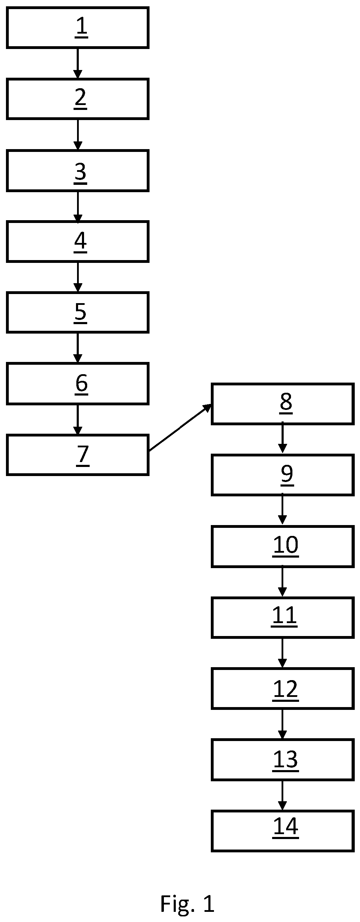

- Figure 1 is a schematic representation of the order of the main steps of the method.

### DETAILED DESCRIPTION

The present invention relates to a method of managing resources of an infrastructure for Network Function Virtualization, as defined in claim 1. Further embodiments are set out in the appended dependent claims.

This method comprises the step of providing 1 a first database containing historical telephony infrastructure management data. This historical telephony infrastructure management data is related to a predetermined time frame.

The method further comprises the step of providing 2 a control unit in signal communication with the database.

The method also comprises the step of providing 3 an automatic learning mechanism. As more clearly explained below, the automatic learning mechanism, once trained, allows a forecast to be made from input data.

The automatic learning mechanism may correspond, for example, to advanced statistical techniques, such as linear or polynomial regression methods, or possibly Auto-Regressive Integrated Moving Average with exogenous inputs (ARIMAX) methods. Alternatively, the automatic learning mechanism corresponds to machine learning techniques or auto-regressive models that use exogenous inputs such as Nonlinear Auto-Regressive with exogenous Input (NARX), or Support-Vector Machine for Regression (SVR). As a further example, the automatic learning mechanism corresponds to possibly deep neural networks for prediction of time series, such as Multi-Layer Perceptron (MLP) neural networks, Recurrent Neural Networks (RNN), Long Short-Term Memory (LSTM) or Gated recurring Unit (GRU) deep neural networks.

Finally, the automatic learning mechanism may comprise a combination of the aforementioned different predictive techniques to refine forecast accuracy. For example, the automatic learning mechanism might comprise statistical and/or machine learning methods for predicting constant and low/very low frequency components and dense and/or recurrent neural networks for predicting high/very high frequency components.

It should be noted that the aforementioned exemplary methods of the automatic learning mechanism are well known to the skilled person and will not be described herein.

Then, the method comprises the step of extrapolating 4, by the control unit, at least one first subset of historical data from the historical telephony infrastructure management data. The first subset of historical data is related to a first predefined time window. Preferably, each first subset of extrapolated historical data is related to the first predetermined time window. Still preferably, the first predetermined time window corresponds, for example, to one or more weeks of the predetermined time frame.

The method further comprises the step of extrapolating 5, by the control unit, at least one second subset of historical data from the historical telephony infrastructure management data. The second subset of historical data is related to a second predetermined time window. Preferably, each second subset of extrapolated historical data is related to the second predetermined time window. Still preferably, the second predetermined time window corresponds, for example, to one or more weeks of the predetermined time frame.

In addition, the method comprises the step of defining 6, by the control unit, a historical input vector comprising the historical data of the first subset of historical data. Preferably, the historical input vector comprises the historical data of each first subset of historical data extrapolated in the previous steps.

The method also comprises the step of defining 7, by the control unit, a historical output vector comprising the historical data of the second subset of historical data. Preferably, the historical output vector comprises the historical data of each second subset of historical data extrapolated in the previous steps.

Then, the method comprises the step of training 8, by the control unit, the automatic learning mechanism to obtain, at its output, the historical output vector by providing the historical input vector at the input of the automatic learning mechanism. In other words, the automatic learning mechanism is trained to provide the historical data related to the second predetermined time window when the historical data related to the first predetermined time window is input. Preferably, the automatic learning mechanism is trained in a supervised manner.

After the step of training 8 the automatic learning mechanism, the method comprises the step of acquiring 9, by the control unit, at least one subset of current telephony infrastructure management data. This current data relates to a current time window. Preferably, such current data is acquired in real time.

In addition, the method comprises the step of defining 10 a historical input vector comprising the subset of current data.

Following the step of defining 10 a current input vector, the method comprises the step of providing 11 the current input vector to the trained automatic learning mechanism to obtain a prediction output vector. The prediction output vector comprises a plurality of telephony infrastructure management forecast data items. Such forecast data represents the trend over time of the current data input to the automatic learning mechanism. In other words, such forecast data is related to a prediction time window.

It should be noted that the relationship between the current time window and the prediction time window corresponds to the relationship between the first and second predetermined time windows.

Once the prediction output vector has been obtained, the method comprises the step of analyzing 12 the prediction output vector to define the resource consumption of the telephony infrastructure.

Thus, the method comprises the step of providing 13 an optimal resource allocation algorithm and the step of executing 14 the optimal resource allocation algorithm by inputting the telephony infrastructure resource consumption to obtain an optimization vector at the output. This optimization vector is representative of the number of physical resources to be allocated to virtual machines and of the resources committed by each virtual machine for optimal management of telephony infrastructure resources. Advantageously, predictive optimization of infrastructure management operations is afforded since, considering a resource consumption forecast estimated by the automatic learning mechanism, physical resources may be allocated to virtual machines in a manner that is suitable to the forecast workloads. This will avoid expensive future maintenance of the telephony infrastructure.

Advantageously, the method of the present invention may be used by the person who manages a physical infrastructure, by combining a plurality of information items, as predicted/predictable on a medium/long term: resource utilization levels for already deployed services (INFRA metrics); resource utilization levels for services to be added to the current infrastructure (vendor VNF specifications, and/or INFRA metrics from previous deployments); application-level load volumes or other application-level metrics both for already deployed services and for the new services to be activated (VNF metrics); any suggestions made available through additional metrics estimated by infrastructure operators (EXT metrics) which, based on past experience and business knowledge, are in an unique position to forecast load peaks that could not be otherwise forecast from the historical data available in the infrastructure alone. In addition, the method affords optimization of the BLP infrastructure for capacity planning operations. On the other hand, the method as disclosed in US 2020/0019841 merely invokes the addition of a number of VMs with certain CPU, memory, storage characteristics, and an infrastructure able to meet such demand by immediately allocating new VMs somewhere in the physical infrastructure for example using a resource scheduler. In short, in addition to the use of an RNN/LSTM predictor, the method of the present invention is novel not only in its purpose, but also in terms of the time scale on which it is used, the set of data used for the processing, and the users addressed thereby.

For simplicity, virtual machine allocation will refer hereinafter to allocation of physical resources for virtual machines. Likewise, virtual machines to be allocated will preferably refer to the physical resources to be allocated for virtual machines.

According to a preferred embodiment of the invention, the historical telephony infrastructure management data comprises historical telephony infrastructure monitoring data concerning the level of use of telephony infrastructure resources and/or any occurrence of error conditions or anomalies. The historical telephony infrastructure management data comprises, for example, the level of use of the processor, disks, network, and memory elements.

Still according to the preferred embodiment of the invention, the historical telephony infrastructure management data also comprises historical telephony infrastructure application monitoring data concerning the level of use of the telephony infrastructure application, its performance or reliability and/or any error conditions or anomalies occurred therein. The historical telephony infrastructure application monitoring data comprises, for example, data that measures the number of registered users, the number of sessions, the number of requests received, the number and type of errors encountered, latency statistics, or percentages of incorrect requests caused by multiple factors.

Still according to the preferred embodiment of the invention, the historical telephony infrastructure management data also comprises historical data of time-dependent virtual machine allocation on the telephony infrastructure elements. For example, the historical allocation data is available from the virtual machine deployment system.

Preferably, the step of extrapolating 4 comprises extrapolating a first subset of historical data from the historical telephony infrastructure management data comprising historical telephony infrastructure monitoring data and/or historical telephony infrastructure application monitoring data and/or historical allocation data.

According to one aspect of the invention, before the steps 6 and 7, the method comprises the step of providing a business database containing forecast data concerning the telephony infrastructure. Such forecast data corresponds to forecasts made manually by telephony infrastructure operators.

After the step of providing a business database and before the steps 6 and 7, the method comprises the step of extrapolating a first and a second subsets of forecast data concerning the predetermined first time window and the predetermined second time window, respectively.

Preferably, the step of defining 6 comprises the sub-step of defining the historical input vector as comprising the first subset of historical data and the first subset of forecast data and the step of defining 7 comprises the sub-step of defining the historical output vector as comprising the first subset of historical data and the second subset of forecast data. Therefore, the historical input vector and the historical output vector preferably comprise both historical telephony infrastructure management data and forecast data obtained manually by telephone infrastructure operators. Advantageously, the use of forecast data for training the automatic learning mechanism also improves the accuracy of training of the automatic learning mechanism and thus the forecasts it provides.

In accordance with the preferred embodiment of the invention, the step of extrapolating 5, by the control unit, at least one second subset of historical telephony infrastructure management data comprises the step of selecting, by the control unit, a second subset of historical data related to the second predetermined time window. This second predetermined time window is separate from the first predetermined time window. In other words, the first and second predetermined time windows may be contiguous to or spaced apart from each other by a prediction time interval. For example, the first predetermined time window may be one week of the predetermined time frame, and the second predetermined time window may be the next week of the predetermined time frame. Again, for example, the first and second predefined time windows may be spaced apart by a prediction time interval of one month.

Since the automatic learning mechanism has been trained using a first and a second separate predetermined time windows, the input of a plurality of current data items, related to the current data window, into the trained automatic learning mechanism, will provide a plurality of prediction data items related to a prediction time window contiguous to or spaced apart from the current time window by the value of the prediction time window. In other words, predictions may be obtained about the future behavior of the telephony infrastructure. Thus, for example, prediction telephony infrastructure monitoring data may be obtained from current telephony infrastructure monitoring data and telephony infrastructure application monitoring data . Advantageously, the infrastructure traffic trend may be assessed within a time frame of a few weeks or months. On the other hand, prediction telephony infrastructure application monitoring data may be obtained from current telephony infrastructure monitoring data and telephony infrastructure application monitoring data. Advantageously, the load level trend (i.e. umber of sessions, users, calls, etc.) may be forecast within a time frame of a few weeks or months.

According to a first embodiment of the invention, the step of extrapolating 4, by the control unit, at least one first subset of historical data from the historical telephony infrastructure management data and the step of extrapolating 5, by the control unit, at least one second subset of historical telephony infrastructure management data comprise the sub-step of applying, by the control unit, a genetic algorithm to identify at least one first and/or at least one second optimal subsets of historical data to be provided to the automatic learning mechanism.

Preferably, this genetic algorithm comprises the step of defining a population of random subsets of input variables, which are assigned a score based on the training error obtained by training an automatic learning mechanism from a population of first and/or second subsets of historical data. Then, the genetic algorithm comprises the step of discarding a predetermined number of elements of the population with a higher training error and combining randomly selected pairs among the elements of the population with a lower training error using a cross-over function and generating additional elements by applying a tuning function to a small fraction of random population elements, to restore a population of elements of predetermined size. Then, the genetic algorithm comprises the step of repeating the process of assessing the training error for the elements of the new population, the application of the cross-over function and of the mutation function for a predetermined number of iterations. At the end of repetition of the predetermined number of iterations, the first and/or second subsets of historical data to be used to train the machine learning mechanism are those with higher scores.

According to a second embodiment of the invention, which is alternative to the first embodiment of the invention, the step of extrapolating 4, by the control unit, at least one first subset of historical data from said historical telephony infrastructure management data and the step of extrapolating 5, by the control unit, at least one second subset of historical data from said historical telephony infrastructure management data comprise the sub-step of defining, by the control unit, a predetermined number of iterations.

In addition, still according to the second embodiment of the invention, the steps of extrapolating 4 and 5 comprise the sub-step of repeating, by the control unit, a genetic algorithm for the predetermined number of iterations, to identify a first and/or a second optimal subsets of historical data for each iteration.

Finally, still according to the second embodiment of the invention, the steps of extrapolating 4 and 5 comprise the sub-step of selecting at least one first and/or at least one second subsets of historical data among the subsets of historical data identified in the previous step. Preferably, the steps of extrapolating 4 and 5 comprise the step of selecting the first and/or second subsets of historical data among those obtained in the previous step.

In one aspect, before the step of defining 6, by the control unit, a historical input vector and before the step of defining 7, by the control unit, a historical output vector,, method comprises the steps of aggregating the historical data of the first and/or the second sub-steps of historical data. Advantageously, by aggregation, the historical data of the first and/or second subsets of historical data are reduced to the same time granularity. In other words, the aggregation step consists in dividing the first and/or second predefined time windows into a plurality of time points and in associating the data of the first and/or second subsets of data with a respective time point of the first and/or second predefined time windows.

After the step of aggregating the historical data and before the steps of defining 6 and 7, the method comprises the step of checking whether any time points of the first and/or of the second predetermined time windows have no data of the first and/or of the second subsets of historical data associated therewith and then performing an interpolation operation on the data of the first and/or second subsets of data. For example, data interpolation techniques may correspond to standard data imputation techniques such as linear, polynomial and spline interpolation.

As an alternative to the data interpolation step, if historical data of the first and/or second subsets of historical data were missing for a time interval of the first and/or second predetermined time windows that exceeds a critical threshold, the method includes the step of using deep learning techniques, including for example dense and/or recurrent neural networks, to naturally predict the trend of the missing historical data, thereby avoiding any prejudice to the accuracy of learning and of the prevision of the automatic learning mechanism.

According to a further aspect, still before the steps of defining 6 and 7, the method comprises the step of normalizing the data of the first and/or second subsets of historical data, by applying a minimum-maximum standardization or normalization.

According to the preferred embodiment of the invention, the step of analyzing 12 the prediction output vector for defining the telephony infrastructure resource consumption comprises the sub-step of defining a plurality of coefficients representative of the telephony infrastructure resource consumption.

Still according to the preferred embodiment of the invention, before the step of executing 14 the optimum resource allocation algorithm, the method comprises the step of defining a number of virtual machines to be allocated and the step of defining a number of hosts potentially usable for resource allocation.

After defining the number of virtual machines to be allocated and the number of potentially usable hosts and before the step of executing 14, the method comprises the step of defining a matrix comprising a plurality of binary variables. Therefore, this matrix is a binary matrix. The number of binary variables is equal to the product of the number of virtual machines to be allocated and the number of hosts. Preferably, the matrix has a number of rows equal to the number of virtual machines to be allocated and a number of columns equal to the number of hosts.

After the step of defining the matrix and before the step of executing 14, the method comprises the step of defining a plurality of constraints by processing the plurality of coefficients representative of telephony infrastructure resource consumption. The constraints correspond to the conditions that must be met for the virtual machines and the hardware resources that will host them. Preferably, such constraints correspond to inequalities defined from the binary variables of the rows and columns of the matrix.

The constraints are preferably of linear type. For example, one linear constraint consists in imposing that the summation along a column of the matrix of binary variables for the corresponding resources of each virtual machine be less than the computational resources that the host corresponding to that column can provide, to ensure that the infrastructure will not be overloaded. As an additional example, additional linear constraints may be likewise defined for memory, storage, and network bandwidth resources. As a further example, a linear constraint may correspond to an affinity constraint between the virtual machines of the same VNF, so that the virtual machines must be allocated on the same host to minimize latency during communication therebetween.

Still preferably, in addition to linear constraints, the method defines nonlinear constraints between the virtual machines and the VNFs. If the method also defines nonlinear constraints, the method also comprises the step of defining additional variables and additional constraints to linearize the nonlinear constraints. For example, a nonlinear constraint corresponds to an anti-affinity constraint between the virtual machines of the same VNF, so that the virtual machines must be allocated on different hosts, for example, to increase robustness of the infrastructure by having available (independent) replicas of some of its critical components.

As an additional example, a further constraint may correspond to an affinity and anti-affinity constraint between different VNFs, so that the virtual machines of different VNFs must be all included in the same host or on different hosts, respectively. Finally, as a further example, a further constraint may correspond to a cluster-level affinity constraint, so that the virtual machines of each VNF must be allocated on the hosts contained in the same enclosure.

According to the preferred embodiment of the invention, the step of executing 14 the optimal resource allocation algorithm comprises the sub-step of executing the optimal resource allocation algorithm by providing the matrix and the plurality of constraints at its input to obtain the binary value to be assigned to each binary variable of the matrix at its output. Preferably, in the case of non-linear constraint definitions, the additional variables and additional constraints are also input into the optimal resource allocation algorithm.

Once the optimal resource allocation algorithm has been executed, the step of executing 14 comprises the substep of analyzing the binary values of the binary variables of the matrix to obtain the optimization vector.

Still according to the preferred embodiment of the invention, the step of executing 14 the optimal resource allocation algorithm comprises the sub-steps of defining a limit execution time or a maximum number of iterations and of providing a resolver.

Once the resolver has been provided, the step of executing 14 comprises the step of executing the optimal resource allocation algorithm using the solver with the solver runtime being less than the runtime limit or with the number of iterations performed by the solver being less than the maximum number of iterations.

## Claims

1. A method of managing resources of an infrastructure for Network Function Virtualization, said method comprising the steps of:
- providing (1) a first database containing historical telephony infrastructure management data;
- providing (2) a control unit in signal communication with the database;
- providing (3) an automatic learning mechanism;
- extrapolating (4), by the control unit, at least one first subset of historical data from said historical telephony infrastructure management data, said first subset of historical data being related to a predetermined first time window;
- extrapolating (5), by the control unit, at least one second subset of historical data from said historical telephony infrastructure management data, said second subset of historical data being related to a predetermined second time window;
- defining (6), by the control unit, a historical input vector comprising the historical data of the first subset of historical data;
- defining (7), by the control unit, a historical output vector comprising the historical data of the second subset of historical data;
- training (8), by the control unit, the automatic learning mechanism to obtain, at its output, the historical output vector by providing the historical input vector at the input of the automatic learning mechanism;
- acquiring (9), by the control unit, at least one subset of current telephony infrastructure management data, said current data being related to a current time window;
- defining (10) a current input vector comprising said subset of current data;
- providing (11) the current input vector at the input of the automatic learning mechanism, which is trained to obtain a prediction output vector;
- analyzing (12) the prediction output vector to define the telephony infrastructure resource consumption;
- providing (13) an optimal resource allocation algorithm;
- executing (14) the optimal resource allocation algorithm by providing the telephony infrastructure resource consumption at its input to obtain an optimization vector at the output, said optimization vector being representative of the number of physical resources to be allocated to the virtual machines and the resources committed by each virtual machine for optimized management of telephony infrastructure resources, said method being **characterized in that**
- the step of extrapolating (4), by the control unit, at least one first subset of historical data from said historical telephony infrastructure management data and the step of extrapolating (5), by the control unit, at least one second subset of historical data from said historical telephony infrastructure management data comprise the sub-step of:
- applying, by the control unit, a genetic algorithm to the al least one first subset of historical data and/or to the at least one second subset of historical data to identify at least one first optimal subset of historical data and/or at least one second optimal subset of historical data to be provided to the automatic learning mechanism,
- the step of extrapolating (5), by the control unit, at least one second subset of historical data from said historical telephony infrastructure management data comprises the step of:
- selecting, by the control unit, at least one second subset of historical data related to the second predetermined time window, said second predetermined time window being distinct from the first predetermined time window,
- before the step of defining (6), by the control unit, a historical input vector and before the step of defining (7), by the control unit, a historical output vector, the method comprises the steps of aggregating the historical data of the first and/or the second sub-steps of historical data.

2. The method as claimed in claim 1, wherein:
- the historical telephony infrastructure management data comprises:
- historical telephony infrastructure monitoring data concerning the level of use of telephony infrastructure resources and/or any occurrence of error conditions or anomalies therein;
- historical telephony infrastructure application monitoring data concerning the level of use of the telephony infrastructure application, its performance or reliability and/or any error conditions or anomalies occurred therein;
- historical data of time-dependent virtual machine allocation on the telephony infrastructure elements.
- the step of extrapolating (4) comprises extrapolating a first subset of historical data from said historical telephony infrastructure management data comprising historical telephony infrastructure monitoring data and/or historical telephony infrastructure application monitoring data and/or historical allocation data.

3. The method as claimed in claim 1 or 2,
- wherein before steps (6) and (7), the method comprises the steps of:
- providing a business database containing forecast data for the telephony infrastructure;
- extrapolating a first and a second subsets of forecast data concerning the predetermined first time window and the predetermined second time window, respectively;
- wherein the step of defining (6) comprises the sub-step of defining the historical input vector as comprising the first subset of historical data and the first subset of forecast data; and
- wherein the step of defining (7) comprises the sub-step of defining the historical output vector as comprising the first subset of historical data and the second subset of forecast data.

4. The method as claimed in any of claims 1 to 6, wherein the step of analyzing (12) the prediction output vector for defining the telephony infrastructure resource consumption comprises the sub-step of defining a plurality of coefficients representative of the telephony infrastructure resource consumption.

5. The method as claimed in claim 4, wherein the step of executing (14) the optimal resource allocation algorithm comprises the following steps:
- defining a number of virtual machines to be allocated;
- defining a number of hosts that can be potentially used for resource allocation;
- defining a matrix comprising a plurality of binary variables, the number of binary variables being equal to the product of the number of virtual machines to be allocated and the number of hosts;
- defining a plurality of constraints by processing the plurality of coefficients representative of the telephony infrastructure resource consumption;
and wherein the step of executing (14) the optimal resource allocation algorithm comprises:
- the sub-step of executing the optimal resource allocation algorithm by providing the matrix and the plurality of constraints at its input to obtain the binary value to be assigned to each binary variable of the matrix at its output;
- analyzing the binary values of the binary variables of the matrix to obtain the optimization vector.

6. The method as claimed in any of claims 1 to 5, wherein before the step of executing (14) the optimal resource allocation algorithm comprises the following substeps:
- define a runtime limit or a maximum number of iterations;
- providing a solver;
- executing the optimal resource allocation algorithm using the solver with the solver
runtime being less than the runtime limit or with the number of iterations performed by the solver being less than the maximum number of iterations.

## Patentansprüche

1. Verfahren zur Verwaltung von Ressourcen einer Infrastruktur für Netzwerkfunktionsvirtualisierung, wobei das genannte Verfahren die folgenden Schritte umfasst:
- Bereitstellen (1) einer ersten Datenbank mit historischen Telefonieinfrastrukturverwaltungsdaten;
- Bereitstellen (2) einer Steuerungseinheit in Signalverbindung mit der Datenbank;
- Bereitstellen (3) eines Mechanismus für automatisches Lernen;
- Extrapolieren (4), durch die Steuerungseinheit, mindestens einer ersten Teilmenge historischer Daten aus den genannten historischen Telefonieinfrastrukturverwaltungsdaten, wobei die genannte erste Teilmenge historischer Daten einem vorab bestimmten ersten Zeitfenster zugeordnet ist;
- Extrapolieren (5), durch die Steuerungseinheit, mindestens einer zweiten Teilmenge historischer Daten aus den genannten historischen Telefonieinfrastrukturverwaltungsdaten, wobei die genannte zweite Teilmenge historischer Daten einem vorab bestimmten zweiten Zeitfenster zugeordnet ist;
- Definieren (6), durch die Steuerungseinheit, eines historischen Eingabevektors umfassend die historischen Daten der ersten Teilmenge historischer Daten;
- Definieren (7), durch die Steuerungseinheit, eines historischen Ausgabevektors umfassend die historischen Daten der zweiten Teilmenge historischer Daten;
- Trainieren (8), durch die Steuerungseinheit, des Mechanismus für automatisches Lernen zum Abrufen, an seiner Ausgabe, des historischen Ausgabevektors, indem der historische Eingabevektor an der Eingabe des Mechanismus für automatisches Lernen bereitgestellt wird;
- Erfassen (9), durch die Steuerungseinheit, mindestens einer Teilmenge aktueller Telefonieinfrastrukturverwaltungsdaten, wobei die genannten aktuellen Daten einem aktuellen Zeitfenster zugeordnet sind;
- Definieren (10) eines aktuellen Eingabevektors umfassend die genannte Teilmenge aktueller Daten;
- Bereitstellen (11) des aktuellen Eingabevektors an der Eingabe des Mechanismus für automatisches Lernen, der trainiert ist, um einen Vorhersageausgabevektor abzurufen;
- Analysieren (12) des Vorhersageausgabevektors, um den Ressourcenverbrauch der Telefonieinfrastruktur zu definieren;
- Bereitstellen (13) eines Algorithmus zur optimalen Ressourcenzuweisung;
- Ausführen (14) des Algorithmus zur optimalen Ressourcenzuweisung, indem der Ressourcenverbrauch der Telefonieinfrastruktur an seiner Eingabe bereitgestellt wird, um einen Optimierungsvektor an der Ausgabe abzurufen, wobei der genannte Optimierungsvektor die Anzahl physischer Ressourcen darstellt, die den virtuellen Maschinen zuzuweisen sind, und der Ressourcen, die durch jede virtuelle Maschine zur optimierten Verwaltung von Telefonieinfrastrukturressourcen vorgesehen sind, wobei das genannte Verfahren **dadurch gekennzeichnet ist, dass**
- der Schritt des Extrapolierens (4), durch die Steuerungseinheit, mindestens einer ersten Teilmenge historischer Daten aus den genannten historischen Telefonieinfrastrukturverwaltungsdaten und der Schritt des Extrapolierens (5), durch die Steuerungseinheit, mindestens einer zweiten Teilmenge historischer Daten aus den genannten historischen Telefonieinfrastrukturverwaltungsdaten den folgenden Teilschritt umfassen:
- Anwenden, durch die Steuerungseinheit, eines genetischen Algorithmus auf die mindestens eine erste Teilmenge historischer Daten und/oder auf die mindestens eine zweite Teilmenge historischer Daten, um mindestens eine erste optimale Teilmenge historischer Daten und/oder mindestens eine zweite optimale Teilmenge historischer Daten zu identifizieren, die dem Mechanismus für automatisches Lernen bereitgestellt werden sollen;
- der Schritt des Extrapolierens (5), durch die Steuerungseinheit, mindestens einer zweiten Teilmenge historischer Daten aus den genannten historischen Telefonieinfrastrukturverwaltungsdaten den folgenden Schritt umfasst:
- Auswählen, durch die Steuerungseinheit, mindestens einer zweiten Teilmenge historischer Daten, die dem zweiten vorab bestimmten Zeitfenster zugeordnet ist, wobei sich das genannte zweite vorab bestimmte Zeitfenster von dem ersten vorab bestimmten Zeitfenster unterscheidet,
- vor dem Schritt des Definierens (6), durch die Steuerungseinheit, eines historischen Eingabevektors und vor dem Schritt des Definierens (7), durch die Steuerungseinheit, eines historischen Ausgabevektors, das Verfahren die Schritte des Aggregierens der historischen Daten des ersten und/oder zweiten Teilschritts zu historischen Daten umfasst.

2. Verfahren nach Anspruch 1, wobei
- die historischen Telefonieinfrastrukturverwaltungsdaten umfassen:
- historische Telefonieinfrastrukturüberwachungsdaten betreffend den Nutzungsgrad von Ressourcen der Telefonieinfrastruktur und/oder das Auftreten von Fehlerbedingungen oder Anomalien darin;
- historische Daten zur Überwachung der Telefonieinfrastrukturanwendung betreffend den Nutzungsgrad der Telefonieinfrastrukturanwendung, ihre Leistung oder Zuverlässigkeit und/oder darin aufgetretene Fehlerbedingungen oder Anomalien;
- historische Daten einer zeitabhängigen Zuweisung virtueller Maschinen auf den Telefonieinfrastrukturelementen.
- der Schritt des Extrapolierens (4) das Extrapolieren einer ersten Teilmenge historischer Daten aus den genannten historischen Telefonieinfrastrukturverwaltungsdaten umfassend historische Telefonieinfrastrukturüberwachungsdaten und/oder historische Daten zur Überwachung der Telefonieinfrastrukturanwendung und/oder historische Zuweisungsdaten umfasst.

3. Verfahren nach Anspruch 1 oder 2,
- wobei, vor den Schritten (6) und (7), das Verfahren die folgenden Schritte umfasst:
- Bereitstellen einer Geschäftsdatenbank beinhaltend Prognosedaten für die Telefonieinfrastruktur;
- Extrapolieren einer ersten und einer zweiten Teilmenge von Prognosedaten betreffend jeweils das vorab bestimmte erste Zeitfenster und das vorab bestimmte zweite Zeitfenster;
- wobei der Schritt des Definierens (6) den Teilschritt des Definierens des historischen Eingabevektors als umfassend die erste Teilmenge historischer Daten und die erste Teilmenge von Prognosedaten umfasst; und
- wobei der Schritt des Definierens (7) den Teilschritt des Definierens des historischen Ausgabevektors als umfassend die erste Teilmenge historischer Daten und die zweite Teilmenge von Prognosedaten umfasst.

4. Verfahren nach einem der Ansprüche 1 bis 6, wobei der Schritt des Analysierens (12) des Vorhersageausgabevektors zur Definition des Ressourcenverbrauchs der Telefonieinfrastruktur den Teilschritt des Definierens einer Vielzahl an Koeffizienten umfasst, die den Ressourcenverbrauch der Telefonieinfrastruktur darstellen.

5. Verfahren nach Anspruch 4, wobei der Schritt des Ausführens (14) des Algorithmus zur optimalen Ressourcenzuweisung die folgenden Schritte umfasst:
- Definieren einer zuzuweisenden Anzahl virtueller Maschinen;
- Definieren einer Anzahl an Hosts, die potenziell zur Ressourcenzuweisung verwendet werden können;
- Definieren einer Matrix umfassend eine Vielzahl binärer Variablen, wobei die Anzahl binärer Variablen dem Produkt der Anzahl zuzuweisender virtueller Maschinen und der Anzahl an Hosts entspricht;
- Definieren einer Vielzahl an Einschränkungen, indem die Vielzahl an Koeffizienten verarbeitet wird, die den Ressourcenverbrauch der Telefonieinfrastruktur darstellen;
und wobei der Schritt des Ausführens (14) des Algorithmus zur optimalen Ressourcenzuweisung umfasst:
- den Teilschritt des Ausführens des Algorithmus zur optimalen Ressourcenzuweisung, indem die Matrix und die Vielzahl an Einschränkungen an seiner Eingabe bereitgestellt werden, um den binären Wert abzurufen, der jeder binären Variable der Matrix an seiner Ausgabe zugewiesen werden soll;
- Analysieren der binären Werte der binären Variablen der Matrix, um den Optimierungsvektor abzurufen.

6. Verfahren nach einem der Ansprüche 1 bis 5, umfassend die folgenden Teilschritte vor dem Schritt des Ausführens (14) des Algorithmus zur optimalen Ressourcenzuweisung:
- Definieren einer Laufzeitbegrenzung oder einer maximalen Anzahl an Iterationen;
- Bereitstellen eines Solvers;
- Ausführen des Algorithmus zur optimalen Ressourcenzuweisung mittels des Solvers,
wobei die Solverlaufzeit unter der Laufzeitbegrenzung liegt oder die Anzahl an durch den Solver durchgeführten Iterationen unter der maximalen Anzahl an Iterationen liegt.

## Revendications

1. Procédé de gestion de ressources d'une infrastructure pour la virtualisation de fonction réseau, ledit procédé comprenant les étapes consistant à :
- fournir (1) une première base de données contenant un historique de données de gestion d'infrastructure de téléphonie ;
- fournir (2) une unité de commande en communication de signal avec la base de données ;
- fournir (3) un mécanisme d'apprentissage automatique ;
- extrapoler (4), par l'unité de commande, au moins un premier sous-ensemble de données d'historique à partir dudit historique de données de gestion d'infrastructure de téléphonie, ledit premier sous-ensemble de données d'historique étant relatif à une première fenêtre temporelle prédéterminée ;
- extrapoler (5), par l'unité de commande, au moins un deuxième sous-ensemble de données d'historique à partir dudit historique de données de gestion d'infrastructure de téléphonie, ledit deuxième sous-ensemble de données d'historique étant relatif à une deuxième fenêtre temporelle prédéterminée ;
- définir (6), par l'unité de commande, un vecteur d'entrée d'historique comprenant les données d'historique du premier sous-ensemble de données d'historique ;
- définir (7), par l'unité de commande, un vecteur de sortie d'historique comprenant les données d'historique du deuxième sous-ensemble de données d'historique ;
- entraîner (8), par l'unité de commande, le mécanisme d'apprentissage automatique pour obtenir, en tant que sortie de celui-ci, le vecteur de sortie d'historique par fourniture du vecteur d'entrée d'historique en tant qu'entrée du mécanisme d'apprentissage automatique ;
- acquérir (9), par l'unité de commande, au moins un sous-ensemble de données de gestion d'infrastructure de téléphonie actuelles, lesdites données actuelles étant relatives à une fenêtre temporelle actuelle ;
- définir (10) un vecteur d'entrée actuel comprenant ledit sous-ensemble de données actuelles ;
- fournir (11) le vecteur d'entrée actuel à l'entrée du mécanisme d'apprentissage automatique, qui est entraîné pour obtenir un vecteur de sortie de prédiction ;
- analyser (12) le vecteur de sortie de prédiction pour définir la consommation de ressource d'infrastructure de téléphonie ;
- fournir (13) un algorithme d'allocation de ressources optimale ;
- exécuter (14) l'algorithme d'allocation de ressources optimale par fourniture de la consommation de ressources d'infrastructure de téléphonie en tant qu'entrée de celui-ci pour obtenir un vecteur d'optimisation à la sortie, ledit vecteur d'optimisation étant représentatif du nombre de ressources physiques à allouer aux machines virtuelles et des ressources engagées par chaque machine virtuelle pour la gestion optimisée de ressources d'infrastructure de téléphonie,
ledit procédé étant **caractérisé en ce que**
- l'étape consistant à extrapoler (4), par l'unité de commande, au moins un premier sous-ensemble de données d'historique à partir dudit historique de données de gestion d'infrastructure de téléphonie et l'étape consistant à extrapoler (5), par l'unité de commande, au moins un deuxième sous-ensemble de données d'historique à partir dudit historique de données de gestion d'infrastructure de téléphonie comprennent la sous-étape consistant à :
- appliquer, par l'unité de commande, un algorithme génétique à l'au moins un premier sous-ensemble de données d'historique et/ou à l'au moins un deuxième sous-ensemble de données d'historique pour identifier au moins un premier sous-ensemble optimal de données d'historique et/ou au moins un deuxième sous-ensemble optimal de données d'historique à fournir au mécanisme d'apprentissage automatique,
- l'étape consistant à extrapoler (5), par l'unité de commande, au moins un deuxième sous-ensemble de données d'historique à partir dudit historique de données de gestion d'infrastructure de téléphonie comprend l'étape consistant à :
- sélectionner, par l'unité de commande, au moins un deuxième sous-ensemble de données d'historique relatif à la deuxième fenêtre temporelle prédéterminée, ladite deuxième fenêtre temporelle prédéterminée étant distincte de la première fenêtre temporelle prédéterminée,
- avant l'étape consistant à définir (6), par l'unité de commande, un vecteur d'entrée d'historique et avant l'étape consistant à définir (7), par l'unité de commande, un vecteur de sortie d'historique, le procédé comprend les étapes consistant à agréger les données d'historique des premier et/ou deuxième sous-ensembles de données d'historique.

2. Procédé selon la revendication 1, dans lequel :
- l'historique de données de gestion d'infrastructure de téléphonie comprend :
- un historique de données de surveillance d'infrastructure de téléphonie concernant le niveau d'utilisation de ressources d'infrastructure de téléphonie et/ou toute survenue de conditions d'erreur ou d'anomalie dans celles-ci ;
- un historique de données de surveillance d'application d'infrastructure de téléphonie concernant le niveau d'utilisation de l'application d'infrastructure de téléphonie, sa performance ou fiabilité et/ou toute condition d'erreur ou anomalie survenue dans celles-ci ;
- un historique de données d'allocation de machine virtuelle en fonction du temps sur les éléments d'infrastructure de téléphonie,
- l'étape consistant à extrapoler (4) comprend l'extrapolation d'un premier sous-ensemble de données d'historique à partir dudit historique de données de gestion d'infrastructure de téléphonie comprenant l'historique de données de surveillance d'infrastructure de téléphonie et/ou l'historique de données de surveillance d'application d'infrastructure de téléphonie et/ou l'historique de données d'allocation.

3. Procédé selon la revendication 1 ou 2,
- dans lequel avant les étapes (6) et (7), le procédé comprend les étapes consistant à :
- fournir une base de données commerciale contenant des données de prévision pour l'infrastructure de téléphonie ;
- extrapoler des premier et deuxième sous-ensembles de données de prévision concernant la première fenêtre temporelle prédéterminée et la deuxième fenêtre temporelle prédéterminée, respectivement ;
- dans lequel l'étape consistant à définir (6) comprend la sous-étape consistant à définir le vecteur d'entrée d'historique comme comprenant le premier sous-ensemble de données d'historique et le premier sous-ensemble de données de prévision ; et
- dans lequel l'étape consistant à définir (7) comprend la sous-étape consistant à définir le vecteur de sortie d'historique comme comprenant le premier sous-ensemble de données d'historique et le deuxième sous-ensemble de données de prévision.

4. Procédé selon l'une quelconque des revendications 1 à 6, dans lequel l'étape consistant à analyser (12) le vecteur de sortie de prédiction pour définir la consommation de ressources d'infrastructure de téléphonie comprend la sous-étape consistant à définir une pluralité de coefficients représentatifs de la consommation de ressources d'infrastructure de téléphonie.

5. Procédé selon la revendication 4, dans lequel l'étape consistant à exécuter (14) l'algorithme d'allocation de ressources optimale comprend les étapes suivantes :
- définir un nombre de machines virtuelles à allouer ;
- définir un nombre d'hôtes qui peuvent être potentiellement utilisés pour une allocation de ressources ;
- définir une matrice comprenant une pluralité de variables binaires, le nombre de variables binaires étant égal au produit du nombre de machines virtuelles à allouer et du nombre d'hôtes ;
- définir une pluralité de contraintes par traitement de la pluralité de coefficients représentatifs de la consommation de ressources d'infrastructure de téléphonie ;
et dans lequel l'étape consistant à exécuter (14) l'algorithme d'allocation de ressources optimale comprend :
- la sous-étape consistant à exécuter l'algorithme d'allocation de ressources optimale par fourniture de la matrice et de la pluralité de contraintes en tant qu'entrée de celui-ci pour obtenir la valeur binaire à attribuer à chaque variable binaire de la matrice en tant que sortie de celui-ci ;
- analyser les valeurs binaires des variables binaires de la matrice pour obtenir le vecteur d'optimisation.

6. Procédé selon l'une quelconque des revendications 1 à 5, dans lequel avant l'étape consistant à exécuter (14) l'algorithme d'allocation de ressources optimale le procédé comprend les sous-étapes suivantes :
- définir une limite de temps d'exécution ou un nombre maximal d'itérations ;
- fournir un résolveur ;
- exécuter l'algorithme d'allocation de ressources optimale à l'aide du résolveur, le
temps d'exécution de résolveur étant inférieur à la limite de temps d'exécution ou le nombre d'itérations réalisées par le résolveur étant inférieur au nombre maximal d'itérations.
